Europäisches Patentamt

**European Patent Office**

**Office européen des brevets**

(11) Numéro de publication: **0 176 391**
**B1**

## (12) FASCICULE DE BREVET EUROPÉEN

(45) Date de publication du fascicule du brevet:
**10.05.89**

(51) Int. Cl.⁴: **G 01 N 11/14**

(21) Numéro de dépôt: **85401652.4**

(22) Date de dépôt: **19.08.85**

(54) **Récipient pour matière rhéologiquement évolutive, utilisable dans un consistomètre d'analyse d'évolution rhéologique.**

(30) Priorité: **31.08.84 FR 8413538**

(43) Date de publication de la demande:
**02.04.86 Bulletin 86/14**

(45) Mention de la délivrance du brevet:
**10.05.89 Bulletin 89/19**

(84) Etats contractants désignés:
**BE DE IT NL**

(56) Documents cité:
**DE-A-2 617 078**
**FR-A-1 045 108**
**US-A-2 986 797**

**SOVIET INVENTIONS ILLUSTRATED, semaine K30,
7 septembre 1983, abrégé no. 83-722152/30, Derwent
Publications Ltd.; & SU - A - 960 582**

(73) Titulaire: **TOTAL Compagnie Française des
Pétroles, 5 rue Michel- Ange, F-75016 Paris (FR)**

(72) Inventeur: **Blommaert, Paul, Vieux Chemin de
Willems No. 36, B-7500 Tournai (BE)**

(74) Mandataire: **Descours, Paul, TOTAL Compagnie
Française des Pétroles TEP/PI Tour
Chenonceaux 204 Rond Point du Pont de Sèvres,
F-92516 Boulogne Billancourt Cédex (FR)**

## Description

L'invention se rapporte à des consistomètres comprenant un récipient tel qu'énoncé dans le préambule de la revendication 1 et qui reçoit une matière rhéologiquement évolutive et qui coopère avec un équipement de mesure permettant l'étude de l'évolution rhéologique de cette matière.

Un tel récipient ayant une forme générale cylindrique est connu du document Soviet Inventions Illustrated, K30, 07.09.83, n° 83 722 152/30, Derwent Publications Ltd.

La matière à étudier peut notamment être un ciment de type inorganique, organique ou mixte.

Un tel consistomètre permet de suivre l'évolution dans le temps du processus rhéologique d'une matière dans des conditions très voisines des conditions réelles pour lesquelles on désire connaître cette évolution. Il en est ainsi, en contruction, des bétons, mortiers ou coulis transportés dans des véhicules à conteneurs rotatifs et, en forage, des coulis de ciments que l'on injecte dans les puits.

Bien que l'invention ne se limite pas à cette dernière application, on la décrira plus particulièrement dans le cas de ciments de forage car dans ce cas les conditions d'expérimentation sont particulièrement difficiles.

Dans les forages, par exemple dans les forages pétroliers, il est nécessaire de pomper un laitier de ciment pour l'injecter entre un cuvelage métallique et la formation de terrain qui borde le trou foré. Le durcissement du laitier de ciment assure l'isolement des diverses couches de la formation de terrain existant au droit du trou foré et le maintien en place du cuvelage.

Pour réussir une cimentation, il est important d'utiliser un laitier de ciment à temps de pompabilité (ou temps de prise) bien déterminé. Un temps trop court conduirait à des blocages prématurés et un temps trop long retarderait inutilement la reprise du travail après cimentation.

Un essai de détermination du temps de pompabilité dure généralement plusieurs heures et s'étend parfois sur une journée complète de travail. Comme on souhaite ne pas perdre le récipient à coulis, un opérateur doit être présent à la fin de l'essai afin de pouvoir séparer le coulis en cours de prise d'avec le récipient qui le contient avant durcissement complet du coulis. Il en résulte de grandes contraintes dans l'organisation du travail et parfois l'arrêt d'un essai avant qu'il n'ait permis d'atteindre la valeur de consistance maximale tolérable pour le pompage.

Un objectif de la présente invention est de rendre possible le déroulement d'essais d'évolution dans le temps de la consistance d'une matière, sans la présence d'aucun opérateur après le lancement des essais, l'atteinte de la consistance maximale à laquelle on s'intéresse déclenchant automatiquement l'arrêt du fonctionnement du consistomètre tandis que la séparation de la masse de matière durcie d'avec le récipient qui la contient peut s'effectuer ultérieurement lorsqu'un opérateur est présent, du fait d'une réalisation particulière de ce récipient rendant cette séparation aisée. Même si un opérateur est présent à la fin de l'essai et intervient aussitôt pour la séparation de la matière partiellement durcie d'avec le récipient, l'invention facilite cette séparation en outre, elle permet de parer à une défaillance éventuelle de l'opérateur.

On a déjà proposé (voir le document Soviet Inventions Illustrated, mentionné ci-dessus) d'effectuer in situ des mesures des propriétés rhéologiques d'un fluide au moyen d'un appareil de mesure comportant un récipient cylindrique extérieur formé de deux moitiés pouvant être réunies pour l'utilisation ou écartées l'une de l'autre pour le nettoyage, par rotation d'arbres porteurs de ces deux moitiés. Ce système est encombrant et ne saurait convenir à un consistomètre où le récipient recevant la matière à analyser doit être disposé dans une enceinte à pression et/ou température réglables. Il conviendrait encore moins à un consistomètre où ledit récipient devrait être lui-même entraîné en rotation.

Le document US-A-2 986 797 montre et décrit le démontage d'un moule de fabrication d'un cylindre en ciment après durcissement complet du ciment dans le moule. Ce moule comprend une paroi latérale de forme générale cylindrique, constituée de deux demi-coquilles longitudinales pouvant se raccorder l'une à l'autre le long de deux génératrices diamétralement opposées. Les deux demi-coquilles de ce moule comportent une extrémité longitudinale filetée extérieurement. Un couvercle fileté est prévu pour se visser sur cette extrémité longitudinale filetée.

Un autre objectif de l'invention est de réaliser ce récipient de manière telle qu'il puisse, une fois monté, présenter exactement la même configuration que les récipients actuellement utilisés.

Ces objectifs sont atteints selon l'invention au moyen d'un récipient à matière rhéologiquement évolutive, tel que revendiqué dans la revendication 1.

Selon un mode de réalisation de l'invention, les demi-coquilles élémentaires présentent une face interne continue de forme semi-cylindrique et une face externe comprenant une portion médiane principale, semi-cylindrique, compris entre les deux portions extrêmes filetées extérieurement de diamètre moindre et se raccordant à celles-ci par des chanfreins, tandis que les bagues de serrage présentent chacune une face annulaire tronconique, d'inclinaison complémentaire de celle des chanfreins, prévue pour s'appliquer contre l'un desdits chanfreins lors du serrage de ces bagues de serrage sur les demi-coquilles.

De préférence, les demi-coquilles pénètrent avec serrage les unes dans les autres le long de leurs génératrices de raccordement. Cette pénétration est préférentiellement réalisée par des surfaces longitudinales complémentaires à section transversale en forme de V.

On va décrire, à titre non limitatif, des exemples de réalisation de l'invention en se référant au dessin joint dans lequel:

- la figure 1 représente en coupe verticale partielle l'ensemble d'un consistomètre:
- la figure 2 est une coupe verticale à plus grande échelle du récipient utilisé avec ce consistomètre;
- la figure 3 est une coupe verticale de la paroi latérale, ici cylindrique, d'un tel récipient et la figure 4 en est une coupe transversale selon la ligne 4 - 4 de la figure 3;
- la figure 5 est une coupe verticale d'une bague supérieure venant se visser à la partie supérieure de la paroi latérale cylindrique;
- la figure 6 est une coupe verticale d'une bague inférieure venant se visser à la partie inférieure de la paroi latérale cylindrique; et
- les figures 7 et 8 sont des demi-coupes verticales de variantes de bague inférieure.

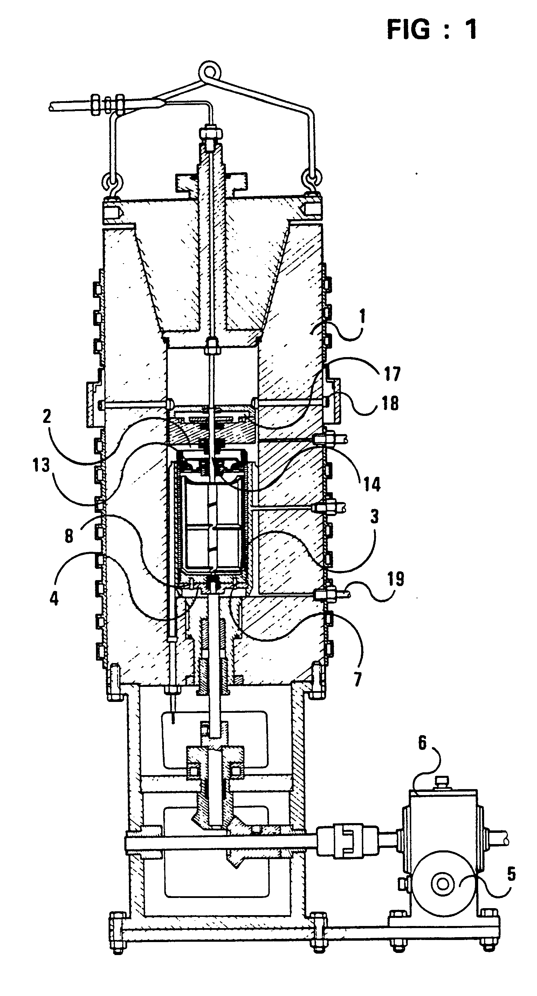

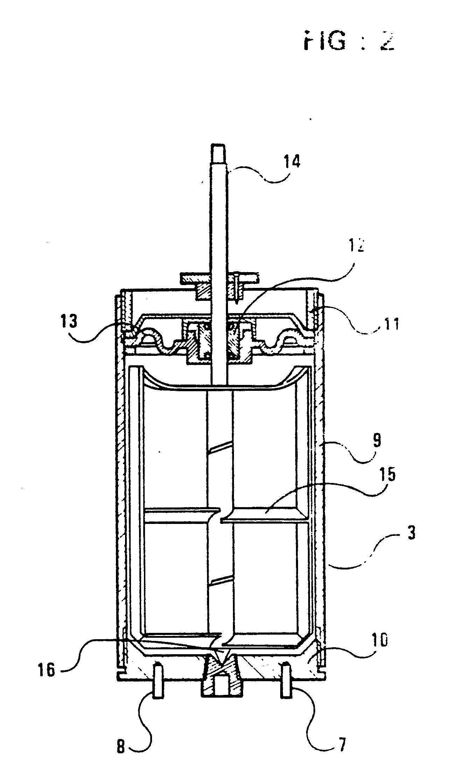

Sur la figure 1 on voit l'ensemble d'un consistomètre comprenant une cuve de forte épaisseur qui forme intérieurement une enceinte 2 dans laquelle est placé un récipient cylindrique 3 recevant une matière dont on veut étudier la rhéologie. Le récipient 3 repose sur un plateau tournant 4 entraîné en rotation par un moteur 5 et une transmission à réduction de vitesse 6. L'entraînement en rotation du récipient 3 se fait par l'intermédiaire de deux goujons 7 et 8 que l'on voit mieux sur la figure 2 et qui pénètrent dans des logements correspondants prévus dans le plateau 4.

Le récipient 3, représenté sur la figure 2, comprend une paroi cylindrique latérale verticale 9 au bas de laquelle se visse un fond 10 porteur des goujons 7 et 8 et au sommet de laquelle se visse une bague 11 de maintien d'un ensemble de palier central 12 étanche et de membrane déformable 13 de sorte qu'un arbre 14 porteur d'un agitateur à palettes 15 peut traverser de manière étanche le sommet du récipient 3 et que la pression dans l'enceinte 2 se communique à l'intérieur du récipient 3 par la déformation de la membrane 13. L'agitateur à palettes 15, qui est désolidarisé en rotation du récipient 3, s'appuie sur le fond 10 par un pivot 16.

En revenant à la figure 1, on voit au-dessus du récipient 3 un ensemble de mesure 17 dont on n'a pas représenté tous les détails et qui comprend, de manière classique, un ressort spiralé tendant à s'opposer à la rotation de l'arbre 14 et une lame solidaire de cet arbre pouvant se déplacer sur une résistance potentiomètrique reliée à l'extérieur par des conducteurs 18.

L'enceinte 2 reçoit de l'huile sous pression par une canalisation 19 et cette huile est portée à la température voulue par un chauffage électrique. On peut ainsi établir dans l'enceinte 2 et, par suite, dans le récipient 3 des conditions de température et de pression proches de celles existant dans les forages où une cimentation est envisagée.

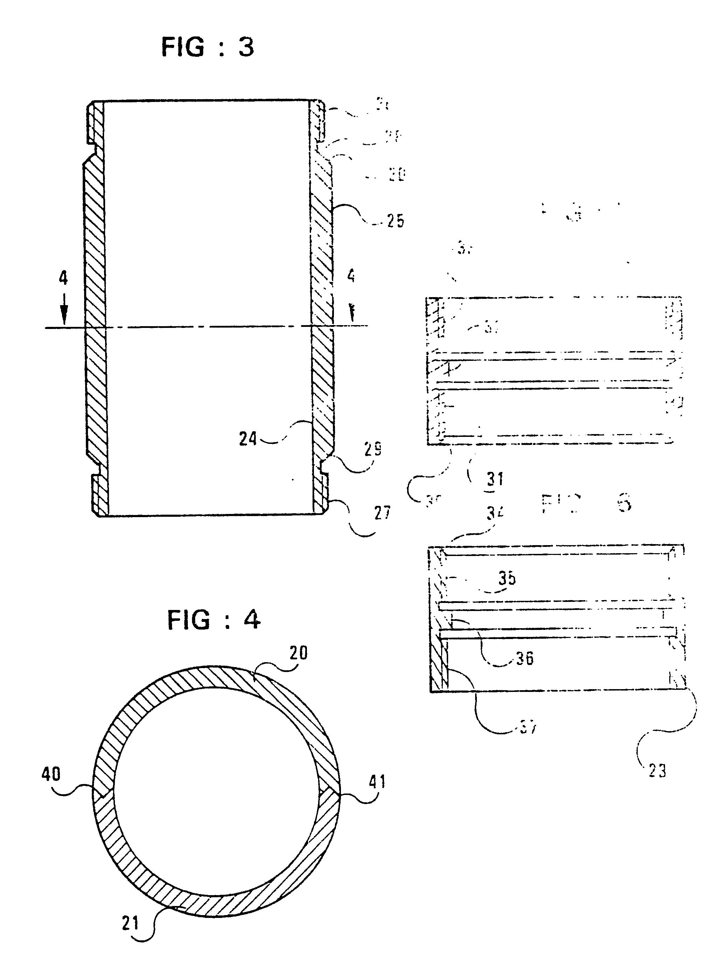

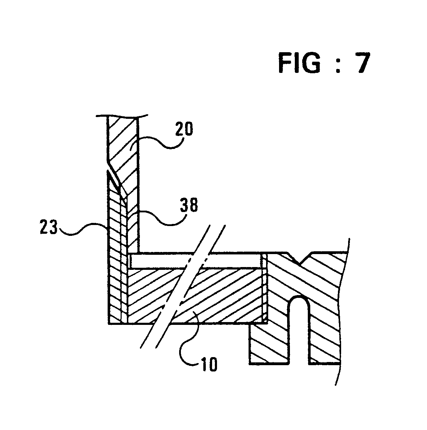

On souhaite faciliter la séparation du laitier de ciment durci d'avec le récipient 3 et pouvoir ainsi, sans risque de perte de ce récipient et de ses accessoires, laisser le consistomètre fonctionner sans surveillance et s'arrêter automatiquement dès que la tension, relevée sur le potentiomètre, a atteint la valeur correspondant à la consistance maximale de laitier admissible pour la pompabilité de celui-ci. Pour cela, au lieu de réaliser la paroi cylindrique verticale 9 en une seule pièce, (on prévoit de constituer cette paroi en quatre parties: deux demi-coquilles 20 et 21 visibles sur la figure 4, une bague supérieure 22 représentée sur la figure 5 et une bague inférieure 23 représentée sur la figure 6.

Les demi-coquilles 20 et 21 présentent une face interne semi-cylindrique 24 continue sur toute la hauteur, tandis que leur face externe comprend une portion semi-cylindrique médiane principale 25 et deux portions extrêmes filetées: une portion supérieure 26 et une portion inférieure 27. Le raccordement entre ces portions s'effectue par un chanfrein semi-circulaire supérieur 28 et par un chanfrein semi-circulaire inférieur 29.

La bague supérieure 22 présente de bas en haut une face tronconique 30 qui vient s'appliquer contre le chanfrein 28 des demi-coquilles 20 et 21 et serre celles-ci l'une contre l'autre une portion filetée interne 31 prévue pour s'engager avec la portion filetée externe supérieure 26 des demi-coquilles 20 et 21; et un épaulement interne annulaire 32 et une portion filetée 33, destinés à recevoir l'ensemble du palier 12 et de la membrane 13 ainsi que la bague 11.

La bague inférieure 23 présente de haut en bas: une face tronconique 34 qui vient s'appliquer contre le chanfrein 29 des demi-coquilles 20 et 21 et serre celles-ci l'une contre l'autre une portion filetée interne 35 prévue pour s'engager avec la portion filetée externe inférieure 27 des demi-coquilles 20 et 21; et un épaulement interne annulaire 36 et une portion filetée interne 37, destinés à recevoir le fond 10.

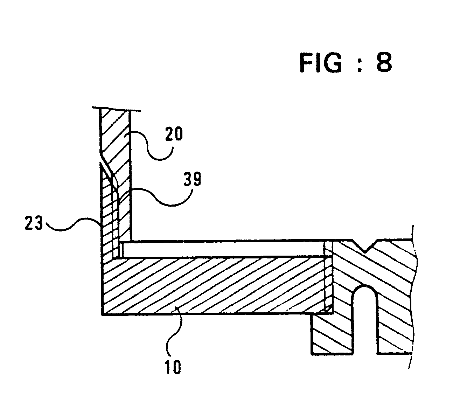

Les figures 7 et 8 montrent des variantes de réalisation de la bague inférieure 23 sans épaulement 36. Dans le cas de la figure 7, une même portion filetée 38 sert, dans le haut, en s'engageant avec la portion filetée inférieure des demi-coquilles 20 et 21, au maintien de celles-ci l'une contre l'autre et, dans le bas en s'engageant avec le fond 10, à la fixation de celui-ci. Cette portion filetée 38 joue donc à la fois le rôle de la portion filetée 35 et de la portion filetée 37. Dans le cas de la figure 8, la bague 23 appartient au fond 10 et un même filetage 39 sert à la fois au maintien des demi-coquilles 20 et 21 l'une contre l'autre et à la fixation du fond 10.

Dans le cas de la figure 8, une légère modification du fond 10 tel qu'il est actuellement utilisé, doit être effectuée. Par contre, dans les autres realisations illustrées, on peut monter sur une paroi cylindrique formée de quatre éléments 20, 21, 22, 23 exactement les mêmes pièces de fermeture supérieure et inférieure que celles employées actuellement avec une paroi cylindrique 9 fabriquée en une seule pièce.

Les deux demi-coquilles 20 et 21 s'emboîtent l'une dans l'autre dans leur portion cylindrique médiane principale 25 comme on l'a représenté sur la figure 4, le long des génératrices de raccordement 40, 41 des deux demi-coquilles. La surface d'emboîtement a ici une section transversale en forme de V. Dans les deux portions filetées 26 et 27, les deux demi-coquilles 20 et 21 s'appliquent l'une contre l'autre selon une surface plane. On pourrait aussi prévoir un joint en tétrafluoréthylène et/ou le dépôt d'un film en matière plastique sur les surfaces de contact.

Les essais effectués ont montré la facilité avec laquelle, après dévissage des bagues 22 et 23, on sépare les deux demi-coquilles 20 et 21 à l'aide, par exemple, de petits coups d'un maillet en bois.

**Revendications**

1. Récipient (3) à matière rhéologiquement évolutive, qui comprend une paroi latérale (9), de forme générale cylindrique ou tronconique, constituée de deux demi-coquilles longitudinales (20, 21) pouvant se raccorder l'une à l'autre le long de deux génératrices (40, 41) diamétralement opposées et qui est destiné à être monté dans un consistomètre et à y coopérer avec un équipement de mesure pour effectuer une analyse rhéologique, caractérisé en ce que ces deux demi-coquilles (20, 21) comportent des extrémités longitudinales (26, 27) filetées extérieurement et en ce que deux bagues de serrage (22, 23) sont prévues pour se visser respectivement sur l'une et l'autre desdites extrémités longitudinales (26, 27) filetées extérieurement et serrer ainsi l'une contre l'autre les deux demi-coquilles (20, 21), l'une (23) de ces bagues portant des moyens (10, 7, 8) de montage du récipient (3) dans une enceinte (2) de consistomètre soumise aux conditions de température et pression prévues pour une analyse d'évolution rhéologique de ladite matière.

2. Récipient (3) selon la revendication 1, caractérisé en ce que les deux demi-coquilles (20, 21) présentent une face interne continue de forme semi-cylindrique et une face externe comprenant une portion médiane principale (25) semi-cylindrique, comprise entre lesdites deux extrémités longitudinales (26, 27) filetées extérieurement de diamètre moindre et se raccordant à celles-ci par des chanfreins (28, 29), tandis que les bagues de serrage (22, 23) présentent chacune une face annulaire tronconique (30, 34), d'inclinaison complémentaire de celle des chanfreins, prévue pour s'appliquer contre l'un desdifs chanfreins lors du serrage de ces bagues de serrage (22, 23) sur les demi-coquilles (20, 21).

3. Récipient (3) selon la revendication 2, caractérisé en ce que les demi-coquilles (20, 21) s'emboîtent l'une dans l'autre le long de leurs génératrices de raccordement (40, 41) grâce à des surfaces longitudinales complémentaires à section transversale en forme de V.

**Patentansprüche**

1. Behälter (3) für ein sich rheologisch entwickelndes Material, mit einer im allgemeinen zylindrischen oder kegelstumpfförmigen Seitenwand (9), die aus zwei längsgerichteten Halbschalen (20, 21) besteht, welche entlang zweier diametral zueinander angeordneter Stirnflächen (40, 41) miteinander verbindbar sind, wobei der Behälter zum Einsatz in einem Konsistometer vorgesehen ist und dort mit einer Meßeinrichtung zur Durchführung rheologischer Untersuchungen zusammenwirkt, dadurch gekennzeichnet, daß die beiden Halbschalen (20, 21) mit Außengewinde versehene Längsenden (26, 27) aufweisen und zwei Spannringe (22, 23) zum Aufschrauben auf jeweils eines der Außengewinde tragenden Längsenden (26, 27) und dadurch zum gegenseitigen Aneinanderpressen der beiden Halbschalen (20, 21) vorgesehen sind, und daß einer der Spannringe (23) Einrichtungen (10, 7, 8) zum Einbau des Behälters (3) in ein Konsistometergehäuse (2) aufweist, das den für eine Untersuchung der rheologischen Entwicklung des Materials vorgesehen Temperatur- und Druckbedingungen ausgesetzt wird.

2. Behälter nach Anspruch 1 dadurch gekennzeichnet, daß die beiden Halbschalen (20, 21) eine kontinuierliche halbzylindrische Innenfläche sowie eine Außenfläche mit einem halbzylindrischen mittleren Hauptabschnitt (25) aufweisen, der zwischen den beiden mit Außengewinde versehenen und im Durchmesser verringerten Längsenden (26, 27) angeordnet ist, die mit Schrägflächen (28, 29) an den Mittelabschnitt angeschlossen sind, während die Spannringe (22, 23) jeweils eine kegelstumpfförmige Ringfläche (30, 34) tragen, deren Neigung derjenigen der Schrägflächen entspricht und die sich beim Festschrauben der Spannringe (22, 23) auf den Halbschalen (20, 21) gegen deren Schrägflächen anlegen.

3. Behälter (3) nach Anspruch 2 dadurch gekennzeichnet, daß die Halbschalen (20, 21) entlang ihrer Stirnflächen (40, 41) gegenseitig verfügt sind, indem komplementäre Längsflächen einen V-förmingen Querschnitt aufweisen.

## Claims

1. A container (3) for rheologically evolutive materials, and for mounting in a consistometer and cooperating therein with measuring equipment for making an analysis of rheological evolution, comprising a side wall (9) of generally cylindrical or frustoconical shape and comprising two longitudinal half-shells (20, 21) adapted to be connected to one another along two diametrically opposite generatrices (40, 41), and having externally threaded longitudinal end portions (26, 27) and two clamp rings (22, 23) for screwing respectively one on each of the externally threaded longitudinal end portions (26, 27) to clamp the two half-shells (20, 21) one against the other, one (23) of the clamp rings carrying means (10, 7, 8) of placing the container (3) in a chamber (2) of consistometer which is submitted to the conditions of temperature and pressure designed for an analysis of the rheological evolution of said materials.

2. A container (3) according to claim 1, wherein the two half-shells (20, 21) have a continuous inner face of semicylindrical shape and an outer face comprising a semicylindrical main central portion (25) lying between the said two externally threaded longitudinal end portions (26, 27) of smaller diameter and connected to these ones by chamfers (28, 29), and the clamp rings (22, 23) each have a frustoconical annular face (30, 34) whose inclination is complementary to that of the chamfers and which is intended to be applied against the respective one of the said chamfers on threading of the clamp rings (22, 23) on the half-shells (20, 21).

3. A container (3) according to claim 2, wherein the half-shells (20, 21) interlock along their connection generatrices (40, 41) by means of complementary longitudinal surfaces of V-shaped cross-section.

FIG : 2

FIG : 3

FIG : 4

FIG : 7

FIG : 8